# FASCICULE DE BREVET EUROPEEN

(11) **EP 4 698 431 B1**
(45) Date de publication et mention de la délivrance du brevet: **13.05.2026**
(21) Numéro de dépôt: 24736705.5
(22) Date de dépôt: 20.06.2024
(51) Int. Cl.: B64C 25/32, B64C 25/52, B64F 1/22

(54) **DISPOSITIF DE MANOEUVRE AU SOL POUR APPAREILS À PATINS DE TRAIN D'ATTERRISSAGE**
BODENMANÖVRIERVORRICHTUNG FÜR FLUGZEUGE MIT LANDEGESTELLEN
GROUND MANOEUVRING DEVICE FOR AEROPLANES WITH LANDING GEAR SKIDS

(30) Priorité: 20.06.2023 FR 2306390
(43) Date de publication de la demande: 25.02.2026
(73) Titulaire: Lledo industries, 13170 Les Pennes-Mirabeau (FR)
(72) Inventeur: LLEDO, Gérard, 13170 LES PENNES-MIRABEAU (FR)
(74) Mandataire: A.P.I. Conseil
(86) Numéro de dépôt international: PCT/EP2024/067356
(87) Numéro de publication internationale: WO 2024/261195

(56) Documents cités:
- EP-A1- 1 860 323
- EP-B1- 3 517 431
- CN-A- 111 516 894
- CN-A- 111 516 894
- US-A- 4 223 856
- US-A- 4 488 612
- US-A- 4 600 168

## Description

### Domaine technique

L'invention concerne le domaine des dispositifs de manœuvre au sol pour appareils à patins de train d'atterrissage, tels que les hélicoptères.

Le document US4600168 décrit des dispositifs similaires.

### Technique antérieure

On connait des hélicoptères qui comprennent généralement deux patins de train d'atterrissage parallèles pour la stabilisation sur le sol de l'hélicoptère.

Dans ce cadre, ces hélicoptères nécessitent des dispositifs de manœuvre pour les déplacer au sol.

À ce titre, on connait le document EP3517431B1 qui décrit un dispositif de manœuvre au sol pour hélicoptère qui permet de soulever un patin de train d'atterrissage à l'aide d'une unité hydraulique.

En pratique, le dispositif de manœuvre au sol du document EP3517431B1 comprend un boîtier avec un mécanisme de fixation, une unité hydraulique avec un piston extensible et un levier pivotant pour transférer un couple, et deux roues horizontales à chaque extrémité du boîtier.

En particulier, l'unité hydraulique est montée dans le boîtier de manière à pouvoir soulever ce dernier verticalement lorsque le piston se déploie.

Cependant, lorsqu'un équipement, comme une nacelle latérale, un panier de travail ou un marchepied est présent au-dessus d'un patin de train d'atterrissage, celui-ci pose peut poser un problème lors de l'installation du dispositif de manœuvre au sol du document EP3517431B1, car de tels équipements peuvent empêcher ou gêner le dispositif de manœuvre au sol du document EP3517431B1 d'être positionné verticalement, comme requis.

Dans ce cas, il peut être nécessaire de démonter les nacelles ou les paniers de travail avant d'installer le dispositif de manœuvre au sol du document EP3517431B1.

Or, cela peut prendre du temps et nécessiter des outils supplémentaires, ce qui peut être coûteux et complexe.

De plus, cela peut augmenter le risque d'endommager les nacelles , les paniers de travail ou l'hélicoptère si on effectue ce processus incorrectement.

Dans le cas de figure d'un marchepied disposé au-dessus d'un patin de train d'atterrissage, il n'est pas possible d'utiliser le dispositif de manœuvre au sol du document EP3517431B1.

Ainsi, il existe un besoin pour une solution qui permet d'éviter la situation décrite ci-dessus.

### Résumé de l'invention

L'invention vise à résoudre, au moins partiellement, ce besoin.

L'invention vise en particulier un dispositif de manœuvre au sol qui est conçu pour soulever un patin de train d'atterrissage d'un appareil à patins de train d'atterrissage afin de le manœuvrer au sol.

En pratique, le patin de train d'atterrissage est préalablement en contact avec le sol et résistant à la traction.

Par ailleurs, le dispositif de manœuvre au sol comprend,
- un corps principal qui s'étend le long d'une direction longitudinale entre une partie arrière et une partie avant, et qui est conçu pour être disposé sur le patin de train d'atterrissage,
- au moins un élément de fixation qui est relié au corps principal et conçu pour être accroché au patin de train d'atterrissage de manière désolidarisable,
- un premier axe rotatif qui s'étend le long d'une direction transversale du corps principal et qui est conçu pour tourner dans la direction transversale,
- une paire de bras pivotants, chaque bras pivotant présentant une partie proximale et une partie distale, les bras pivotants étant reliés l'un à l'autre en parallèle, de manière solidaire en rotation, par leur partie proximale, au premier axe rotatif,
- une paire d'essieux, chaque essieu présentant une extrémité proximale et une extrémité distale,
   - l'extrémité proximale étant reliée de manière solidaire à la partie distale d'un bras pivotant respectif, et
   - l'extrémité distale étant reliée à une roue respective de sorte que la roue peut tourner librement autour de l'essieu,
- au moins un dispositif de déplacement sélectif de la paire de bras pivotants par rapport au corps principal, le dispositif de déplacement sélectif étant disposé à l'intérieur du corps principal et conçu pour agir sur la paire de bras pivotants afin de la faire pivoter en rotation, autour du premier axe rotatif, par rapport au corps principal, de manière à déplacer la paire de bras pivotants entre,
   - une position de transport dans laquelle la partie distale de la paire de bras pivotants est sensiblement orientée dans la direction longitudinale, et
   - une position de fonctionnement dans laquelle la partie distale de la paire de bras pivotants est sensiblement orientée vers le sol, de sorte que les roues entrent en contact avec le sol et que le patin de train d'atterrissage est soulevé du sol,
- au moins un levier de commande qui s'étend le long de la direction longitudinale du corps principal et qui est conçu pour se déplacer selon un mouvement alternatif vertical répété, de monte et baisse, dans une direction verticale par rapport à la direction longitudinale du corps principal, chaque cycle du mouvement alternatif vertical répété comprenant une phase de montée et une phase de baisse successives, pour actionner le dispositif de déplacement sélectif, et
- au moins un élément de rappel couplé au levier de commande et conçu pour ramener automatiquement le levier de commande soit vers un point haut quand la phase de baisse du mouvement alternatif vertical répété atteint un point bas, soit vers le point bas quand la phase de montée du mouvement alternatif vertical répété atteint le point haut, de sorte que le mouvement alternatif vertical du levier de commande est automatiquement répété par alternance d'application et de relâchement d'une force externe par un opérateur sur le levier de commande, dans lequel, le dispositif de déplacement sélectif est conçu pour convertir une pluralité de cycles du mouvement alternatif vertical en un déplacement complet de la paire de bras pivotants entre la position de transport et la position de fonctionnement.

Dans un premier mode de réalisation, le dispositif de manœuvre au sol comprend au moins une pédale, distincte du levier de commande, qui est reliée de manière solidaire au levier de commande et qui est conçue pour être actionnée par l'opérateur de manière à amorcer et imprimer au levier de commande le mouvement d'actionnement alternatif vertical répété qui actionne le dispositif de déplacement sélectif.

Dans un deuxième mode de réalisation, le dispositif de manœuvre au sol comprend en outre un premier dispositif de verrouillage qui maintient la paire de bras pivotants dans la position de fonctionnement, le premier dispositif de verrouillage étant conçu pour,
- lors du passage de la position de transport à la position de fonctionnement, être poussé hors d'un logement formé dans le corps principal par tout ou partie de la partie distale de la paire de bras pivotants contre la force d'un ressort de rappel,
- puis, lorsque la paire de bras pivotants est dans la position de fonctionnement, être ramené automatiquement par le ressort de rappel dans le logement formé dans le corps principal pour verrouiller la paire de bras pivotants dans la position de fonctionnement.

Dans un troisième mode de réalisation, le dispositif de manœuvre au sol comprend,
- un premier axe de rotation qui s'étend dans la direction longitudinale du corps principal et qui est relié à l'élément de fixation de sorte que l'élément de fixation peut tourner autour du premier axe de rotation dans une plage angulaire prédéterminée, et
- au moins un élément de verrouillage qui est conçu pour verrouiller en rotation l'élément de fixation de manière désolidarisable de sorte que l'élément de fixation peut évoluer entre,
   - une position d'accrochage dans laquelle,
      - l'élément de fixation est accroché au patin de train d'atterrissage, et
      - l'élément de verrouillage verrouille en rotation l'élément de fixation,
   - une position libre dans laquelle l'élément de verrouillage laisse libre l'élément de fixation.

Dans une variante du troisième mode de réalisation, l'élément de fixation comprend le premier axe de rotation et l'élément de verrouillage.

Dans un quatrième mode de réalisation, le dispositif de manœuvre au sol comprend,
- un axe de rotation d'un dispositif de traction qui s'étend le long d'une direction transversale du corps principal, et
- un dispositif de traction rotatif à prise manuelle qui comprend au moins une première poignée de traction et au moins un bras longitudinal, le bras longitudinal présentant une première extrémité et une deuxième extrémité, la première poignée de traction étant reliée à la première extrémité du bras longitudinal, l' axe de rotation du dispositif de traction étant relié à la deuxième extrémité du bras longitudinal,
dans lequel, le dispositif de traction rotatif à prise manuelle est conçu pour être déplacé en rotation entre au moins,
- une position repliée dans laquelle le dispositif de traction rotatif à prise manuelle est replié sur le corps principal, et
- une position déployée dans laquelle,
   - le dispositif de traction rotatif à prise manuelle s'éloigne du corps principal en faisant saillie longitudinalement du corps principal, et
   - le corps principal peut être incliné par rapport au sol et peut être tiré par le dispositif de traction rotatif à prise manuelle dans une position de mouvement roulant incliné, de manière à permettre à l'opérateur de faire rouler le dispositif de manœuvre au sol jusqu'à un emplacement souhaité en poussant ou en tirant le dispositif de traction rotatif à prise manuelle dans une direction souhaitée.

Dans un premier exemple du quatrième mode de réalisation, la différence angulaire de position du dispositif de traction rotatif à prise manuelle entre la position repliée et la position déployée est de 180° ou moins.

Dans un deuxième exemple du quatrième mode de réalisation, le dispositif de traction rotatif à prise manuelle est en outre conçue pour être déplacée dans une position de stabilisation, depuis la position déployée ou depuis la position repliée, dans laquelle,
- le corps principal peut être incliné par rapport au sol, et
- le dispositif de traction rotatif à prise manuelle entre en contact avec le sol au niveau de son extrémité distale et supporte le corps principal.

Dans une variante du deuxième exemple du quatrième mode de réalisation, la différence angulaire de position du dispositif de traction rotatif à prise manuelle entre la position déployée et la position de stabilisation est de 90° ou moins.

Dans une mise en œuvre particulière du quatrième mode de réalisation, le dispositif de dispositif de manœuvre au sol comprend en outre un deuxième dispositif de verrouillage, qui maintient le dispositif de traction rotatif à prise manuelle dans une position repliée, une position déployée ou une position de stabilisation, le deuxième dispositif de verrouillage étant conçu pour,
- se mettre en prise dans des trous correspondant auxdites positions du dispositif de traction rotatif et formés dans le levier de commande,
- être poussé par un ressort pour s'insérer automatiquement dans l'un desdits trous lorsque le dispositif de traction rotatif atteint l'une desdites positions, et
- être tiré par un opérateur pour se désengager du trou et permettre la rotation du dispositif de traction rotatif jusqu'à un autre desdits trous.

Dans un cinquième mode de réalisation, le dispositif de déplacement sélectif comprend en outre une deuxième poignée de traction qui est disposée et agencée sur le corps principal de sorte que l'opérateur peut saisir, en même temps, la pédale et la deuxième poignée de traction pour transporter le dispositif de manœuvre au sol et/ou positionner le dispositif de manœuvre au sol sur le patin de train d'atterrissage.

Dans un sixième mode de réalisation, le dispositif de déplacement sélectif comprend au moins un vérin hydraulique qui comprend,
- au moins un piston extensible qui présente une extrémité qui est conçue pour agir sur la paire de bras pivotants de manière à déplacer la paire de bras pivotants entre la position de transport et la position de fonctionnement,
- au moins une tige de vérin qui est reliée au piston extensible.
- au moins un réservoir de fluide hydraulique,
- un axe rotatif d'actionnement de la pompe hydraulique qui s'étend le long d'une direction transversale du corps principal et qui est conçu pour tourner dans la direction transversale, l' axe rotatif d'actionnement de la pompe hydraulique étant relié au levier de commande de manière solidaire en rotation,
- un système de transmission de mouvement qui est relié à l'axe rotatif d'actionnement de la pompe hydraulique et qui est conçu pour transformer la rotation de l'axe rotatif d'actionnement de la pompe hydraulique en un mouvement linéaire, et
- au moins une pompe hydraulique qui est reliée au système de transmission de mouvement et au réservoir de fluide hydraulique, la pompe hydraulique étant conçue pour,
   - alimenter le dispositif de déplacement sélectif en fluide hydraulique à partir du réservoir de fluide hydraulique, et
   - être actionnée par le système de transmission de mouvement. dans lequel, le système de transmission de mouvement comprend,
- au moins un levier de transmission qui est relié à l'axe rotatif d'actionnement de la pompe hydraulique de manière solidaire en rotation, et
- une pluralité de biellettes dont au moins une biellette relie le levier de transmission à la pompe hydraulique.

Dans un septième mode de réalisation, chaque bras pivotant se présente sous forme d'une plaque qui comprend au moins une première ouverture d'allègement.

Dans un huitième mode de réalisation, le levier de commande se présente sous forme d'une plaque qui comprend au moins une deuxième ouverture d'allègement.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente deux dispositifs de manœuvre au sol selon l'invention que l'on a respectivement installé sur un patin de train d'atterrissage d'un hélicoptère.
[Fig. 2] La figure 2 représente une première vue zoomée de la figure 1.
[Fig. 3] La figure 3 représente une deuxième vue zoomée de la figure 1.
[Fig. 4] La figure 4 représente un dispositif de manœuvre au sol selon l'invention, escamoté d'une roue.
[Fig. 5] La figure 5 représente un mécanisme de bras pivotant du dispositif de manœuvre au sol selon l'invention.
[Fig. 6] La figure 6 représente une partie d'un mécanisme de bras pivotant du dispositif de manœuvre au sol selon l'invention, lorsqu'il est relié à une roue.
[Fig. 7] La figure 7 représente un dispositif de manœuvre au sol selon l'invention, dans une position de transport.
[Fig. 8] La figure 8 représente un dispositif de manœuvre au sol selon l'invention, dans une position intermédiaire, entre la position de transport et une position de fonctionnement.
[Fig. 9] La figure 9 représente un dispositif de manœuvre au sol selon l'invention, dans la position de fonctionnement.
[Fig. 10] La figure 10 représente un élément de fixation selon l'invention.
[Fig. 11] La figure 11 représente un dispositif de manœuvre au sol selon l'invention, avec un dispositif de traction rotatif en position déployée.
[Fig. 12] La figure 12 représente un dispositif de manœuvre au sol selon l'invention, avec le dispositif de traction rotatif en position de stabilisation.
[Fig. 13] La figure 13 représente un dispositif de déplacement sélectif selon l'invention.

Les figures ne respectent pas nécessairement les échelles, et ce, à des fins d'illustration.

En outre, certains dessins sont présentés en couleurs et/ou en transparence, car leur représentation en noir et blanc est impossible. En particulier, les couleurs sont nécessaires dans ces dessins pour discerner des détails qui seraient perdus s'ils étaient présentés en noir et blanc.

### Description des modes de réalisation

### Remarques préliminaires

Afin de ne pas obscurcir la description et détourner le lecteur de la compréhension des enseignements de l'invention, nos explications n'iront pas au-delà de ce que nous considérons comme nécessaire pour la compréhension et l'appréciation des concepts sous-jacents de l'invention par une personne du domaine technique des dispositifs de manutention. En effet, les modes de réalisation illustrés dans la description sont, pour la plupart, composés d'éléments connus de la personne du métier.

### Objectif de l'invention

L'un des objectifs de cette invention est de fournir un dispositif de manœuvre pour déplacer au sol un appareil à patins de train d'atterrissage, tel qu'un aéronef (p. ex. un hélicoptère), qui ne nécessite pas de démonter une nacelle latérale ou un panier de travail lorsque l'appareil en est équipé et que l'on peut installer sans être gêné par la présence d'un marchepied disposé au-dessus du patin de train d'atterrissage.

Pour cela, l'inventeur propose un dispositif de manœuvre au sol qui comprend des bras pivotants qui sont reliés à des roues, les bras pivotants étant actionnés par un mouvement de va-et-vient vertical d'un levier de commande, transmis par un dispositif de déplacement sélectif, tel un vérin. Ce mouvement alternatif vertical répété du levier de commande, de haut en bas, entraîne la rotation des bras pivotants par rapport au corps du dispositif de manœuvre au sol, jusqu'à ce que les roues entrent en contact avec le sol et que le patin de train d'atterrissage est soulevé du sol. Un mécanisme de rappel ramène automatiquement le levier de commande dans sa position initiale haute après chaque action de pompage, permettant ainsi d'enchaîner facilement les mouvements de va-et-vient.

Grâce à son mécanisme de pompage vertical avec rappel automatique actionnable au pied, le dispositif de manœuvre au sol selon l'invention permet une installation rapide et facile sur les patins de train d'atterrissage d'un appareil à patins de train d'atterrissage, tel qu'un hélicoptère.

En outre, cela permet d'économiser du temps et des coûts liés à la dépose et à la repose des nacelles ou des paniers de travail, ainsi que de réduire le risque d'endommager les nacelles, les paniers de travail ou l'hélicoptère. La possibilité de pomper avec le pied en restant debout facilite grandement la mise en place du dispositif par un seul opérateur, réduisant ainsi la pénibilité et les risques de troubles musculo-squelettiques liés à une position accroupie ou penchée. Il est également possible de positionner le dispositif de manœuvre au sol, même si appareil à patins de train d'atterrissage comprends un marchepied disposé au-dessus du patin de train d'atterrissage, évitant ainsi à l'opérateur d'avoir à travailler dans une position inconfortable et contraignante.

De plus, la poignée de manutention repliable permet de manipuler aisément le dispositif, même dans des espaces exigus ou en présence d'obstacles. Cela permet d'améliorer l'efficacité globale du processus de maintenance et de mise en service des appareils à patins de train d'atterrissage qui sont équipés de nacelles latérales, de paniers de travail ou de marchepied disposé comme indiqué ci-dessus.

Enfin, la polyvalence apportée par ces caractéristiques ergonomiques permet de rendre le dispositif de manœuvre au sol selon l'invention plus polyvalent et donc potentiellement plus attractif pour les opérateurs qui utilisent régulièrement des appareils à patins de train d'atterrissage avec des configurations différentes.

### Structure générale de l'invention

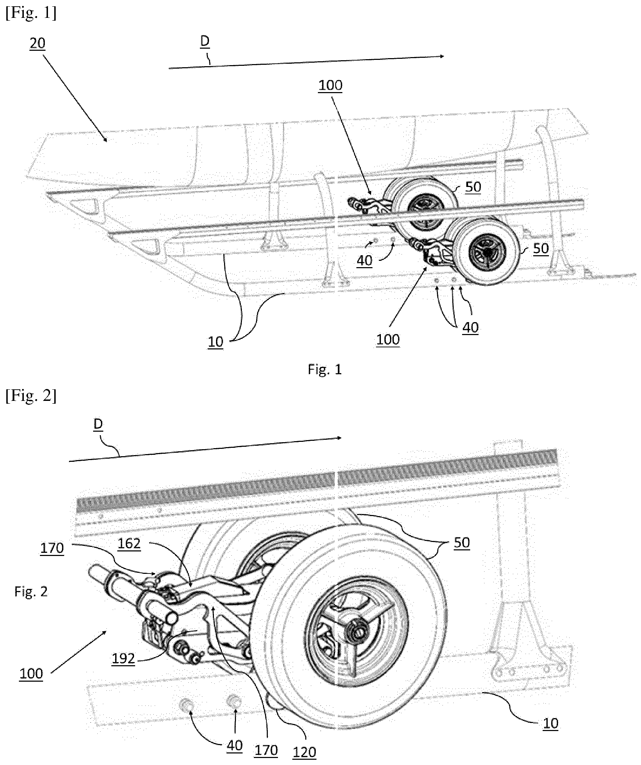

Comme illustré sur la figure 1, la figure 2 et la figure 3, l'invention concerne un dispositif de manœuvre au sol 100 qui est conçu pour soulever un patin de train d'atterrissage 10 d'un appareil à patins de train d'atterrissage afin de le manœuvrer au sol.

Dans l'exemple des figures 1 à 3, l'appareil est un aéronef, tel qu'un hélicoptère 20.

Toutefois, selon les besoins et les ressources disponibles, on pourra envisager d'utiliser le dispositif de manœuvre au sol 100 sur d'autres appareils à patins de train d'atterrissage, et ce, sans nécessiter de modifications substantielles de l'invention.

En particulier, dans l'invention, on considère que le patin de train d'atterrissage 10 est préalablement en contact avec le sol.

Par ailleurs, dans l'invention, on considère que le patin de train d'atterrissage 10 est résistant à la traction.

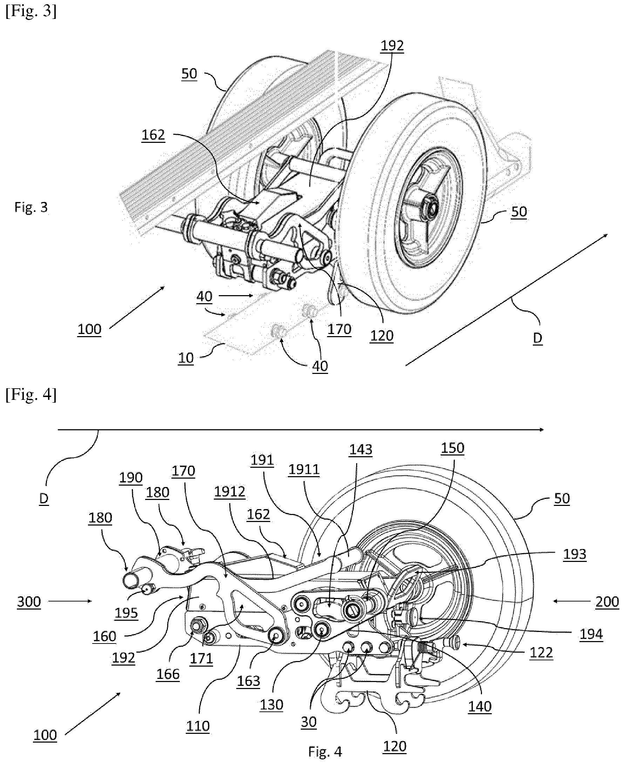

Comme illustré sur la figure 4, le dispositif de manœuvre au sol 100 comprend un corps principal 110, au moins un élément de fixation 120, un premier axe rotatif 130, une paire de bras pivotants 140, une paire d'essieux 150, au moins un dispositif de déplacement sélectif 160 de la paire de bras pivotants 140, au moins un levier de commande 170 et au moins un au moins un élément de rappel (non représenté).

Ainsi, le dispositif de manœuvre au sol 100 peut comprendre un corps principal 110, deux ou plus de deux éléments de fixation 120, un premier axe rotatif 130, une paire de bras pivotants 140, une paire d'essieux 150, deux ou plus de deux dispositifs de déplacement sélectif 160 de la paire de bras pivotants 140, deux ou plus de deux leviers de commande 170 et deux ou plus de deux éléments de rappel.

### Le corps principal

Comme illustré sur la figure 4, la figure 7, la figure 8, la figure 9 et la figure 13, le corps principal 110 s'étend le long d'une direction longitudinale D entre une partie arrière 200 et une partie avant 300.

En outre, la largeur du corps principal 110 s'étend le long d'une direction transversale du corps principal 110, la direction transversale étant sensiblement perpendiculaire à la direction longitudinale D.

Par ailleurs, le corps principal 110 est conçu pour être disposé sur le patin de train d'atterrissage 10.

Dans un premier exemple, la largeur du corps principal 110 est sensiblement égale au diamètre ou à la largeur du patin de train d'atterrissage 10.

Dans un deuxième exemple, la largeur du corps principal 110 est sensiblement supérieure au diamètre ou à la largeur du patin de train d'atterrissage 10.

Toutefois, selon les besoins et les ressources disponibles, on pourra envisager d'autres valeurs de la largeur du corps principal 110, et ce, sans nécessiter de modifications substantielles de l'invention.

### L'élément de fixation

Comme illustré sur la figure 2, la figure 3, la figure 4, la figure 7, la figure 8, la figure 9 et la figure 10, l'élément de fixation 120 est relié au corps principal 110.

Dans un exemple, l'élément de fixation 120 est relié au corps principal 110 par au moins un élément de raccordement 30 tel qu'un rivet, un boulon, une vis ou similaire.

Toutefois, selon les besoins et les ressources disponibles, on pourra envisager d'utiliser d'autres éléments de raccordement 30, et ce, sans nécessiter de modifications substantielles de l'invention.

En particulier, l'élément de fixation 120 est disposé sous le corps principal 110, de sorte que, en fonctionnement, seul l'élément de fixation 120 entre en contact avec le patin de train d'atterrissage 10.

Dans l'exemple des figures 2 à 4 et 7 à 10, l'élément de fixation 120 est disposé dans la partie arrière 200 du corps principal 110.

Toutefois, selon les besoins et les ressources disponibles, on pourra envisager de disposer l'élément de fixation 120 ailleurs entre la partie arrière 200 et la partie avant 300 du corps principal 110, et ce, sans nécessiter de modifications substantielles de l'invention.

Par ailleurs, l'élément de fixation 120 est conçu pour être accroché au patin de train d'atterrissage 10 de manière désolidarisable.

Dans un premier exemple de l'élément de fixation 120, celui-ci se présente sous la forme de crochets de fixage qui sont conçus pour être accrochés à une pluralité de plots 40 (illustrés sur la figure 1, la figure 2, et la figure 3) ou boulons d'accrochage qui sont situés sur le patin de train d'atterrissage 10.

Dans un deuxième exemple de l'élément de fixation 120, celui-ci se présente sous la forme de crochets de fixage qui sont conçus pour s'insérer dans des ouvertures de fixage (non représentées) qui sont pratiquées dans le patin de train d'atterrissage 10.

Toutefois, selon les besoins et les ressources disponibles, on pourra envisager d'utiliser d'autres formes de l'élément de fixation 120, et ce, sans nécessiter de modifications substantielles de l'invention.

### Le premier axe rotatif

Comme illustré sur la figure 4, la figure 5, la figure 7, la figure 8, la figure 9 et la figure 13, le premier axe rotatif 130 s'étend le long d'une direction transversale du corps principal 110.

Dans l'exemple des figures 4 à 5, 7 à 9 et 13, le premier axe rotatif 130 est disposé dans la partie arrière 200 du corps principal 110.

Toutefois, selon les besoins et les ressources disponibles, on pourra envisager de disposer le premier axe rotatif 130 ailleurs entre la partie arrière 200 et la partie avant 300 du corps principal 110, et ce, sans nécessiter de modifications substantielles de l'invention.

Par ailleurs, le premier axe rotatif 130 est conçu pour tourner dans la direction transversale.

### La paire de bras pivotants

La paire de bras pivotants 140 est illustrée sur la figure 4, la figure 5, la figure 6, la figure 7, la figure 8, la figure 9 et la figure 13.

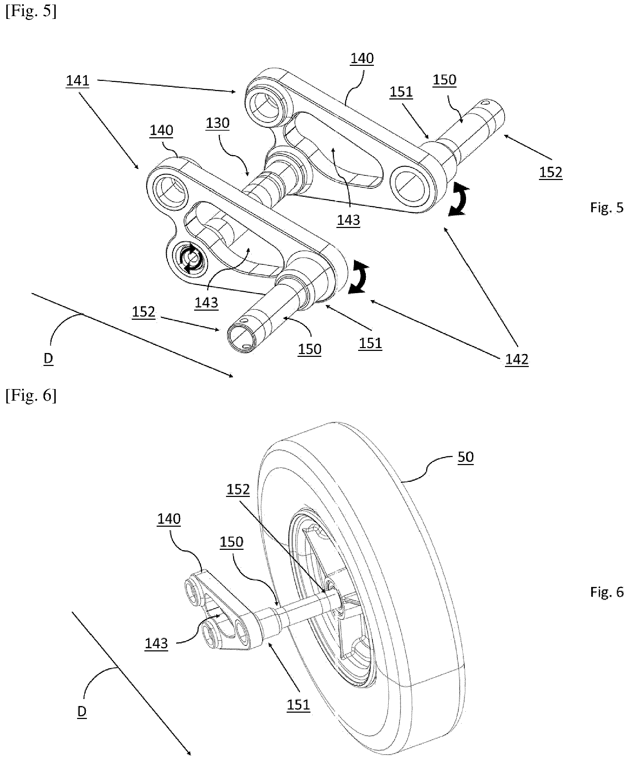

Par ailleurs, comme illustré sur la figure 5, chaque bras pivotant 140 présente une partie proximale 141 et une partie distale 142.

Dans l'exemple des figures 4 à 9 et 13, les bras pivotants 140 sont disposés dans la partie arrière 200 du corps principal 110 de sorte que la partie distale 142 de chaque bras pivotant 140 est orientée vers la partie arrière 200 du corps principal 110 et que la partie proximale 141 de chaque bras pivotant 140 est orientée vers la partie avant 300 du corps principal 110.

Toutefois, selon les besoins et les ressources disponibles, on pourra envisager de disposer les bras pivotants 140 ailleurs entre la partie arrière 200 et la partie avant 300 du corps principal 110, et ce, sans nécessiter de modifications substantielles de l'invention.

Par ailleurs, les bras pivotants 140 sont reliés l'un à l'autre en parallèle, de manière solidaire en rotation, par leur partie proximale 141, au premier axe rotatif 130.

Dit autrement, les bras pivotants 140 sont fixés de manière à tourner avec le premier axe rotatif 130, sans pouvoir bouger indépendamment de sorte que lorsque le premier axe rotatif 130 tourne, les bras pivotants 140 se déplacent également en rotation.

Dans une façon particulière de mettre en œuvre l'invention, le premier axe rotatif 130 est relié à une partie inférieure de la partie proximale 141 de la paire de bras pivotants 140.

Dans un mode de réalisation de l'invention, comme illustré sur la figure 4, la figure 5, la figure 6, la figure 7, la figure 9 et la figure 13, chaque bras pivotant 140 se présente sous forme d'une plaque qui comprend au moins une première ouverture d'allègement 143.

Les ouvertures d'allègement 143 sont des perforations réalisées dans la plaque formant le bras pivotant 140, qui permettent de réduire la masse et l'inertie du bras pivotant 140 tout en conservant sa rigidité. Cela facilite et accélère les mouvements de pivotement du bras 140 lors de l'actionnement du dispositif.

Ainsi, dans ce mode de réalisation de l'invention, chaque bras pivotant 140 peut comprendre deux ou plus de deux premières ouvertures d'allègement 143, réparties de manière à optimiser le rapport rigidité/masse du bras pivotant 140. Plus le nombre d'ouvertures 143 est important, plus le gain de masse est conséquent, permettant un actionnement plus aisé du dispositif par l'opérateur.

### La paire d'essieux

La paire d'essieux 150 est illustrée sur la figure 4, la figure 5, la figure 6 et la figure 13.

Par ailleurs, comme illustré sur la figure 5 et la figure 6, chaque essieu 150 présente une extrémité proximale 151 et une extrémité distale 152.

En outre, chaque essieu 150 est relié de manière solidaire, au niveau de son extrémité proximale 151, à la partie distale 142 d'un bras pivotant 140 respectif.

Par ailleurs, chaque essieu 150 est également relié, au niveau de son extrémité distale 152, à une roue 50 respective, de sorte que la roue 50 peut tourner librement autour de l'essieu 150.

Ainsi, comme illustré sur les figures 4 à 6 et 13, chaque essieu 150 s'étend le long d'une direction transversale du corps principal 110 entre un bras pivotant 140 respectif et une roue 50 respective.

### Le dispositif de déplacement sélectif de la paire de bras pivotants

Comme illustré sur la figure 4, le dispositif de déplacement sélectif 160 de la paire de bras pivotants 140 par rapport au corps principal 110 est disposé à l'intérieur du corps principal 110.

En pratique, le dispositif de déplacement sélectif 160 est conçu pour agir sur la paire de bras pivotants 140 afin de la faire pivoter en rotation, autour du premier axe rotatif 130, par rapport au corps principal 110.

Dans une première façon particulière de mettre en œuvre l'invention, le dispositif de déplacement sélectif 160 est conçu pour agir sur une partie supérieure de la partie proximale 141 de la paire de bras pivotants 140. La force de poussée exercée par le dispositif de déplacement sélectif 160 est ainsi appliquée au-dessus du premier axe rotatif 130, directement sur une partie supérieure de la partie proximale 141 des bras pivotants 140. Cette configuration permet un actionnement efficace des bras pivotants 140 en transmettant la force de manière optimale.

Dans une deuxième façon particulière de mettre en œuvre l'invention, le dispositif de déplacement sélectif 160 est conçu pour agir sur un axe (non représenté) qui relie des parties supérieures de la partie proximale 141 de la paire de bras pivotants 140. Dans ce cas, la force de poussée est appliquée indirectement sur la partie supérieure de la partie proximale 141, via un axe intermédiaire qui relie les parties supérieures des bras pivotants 140. Cet axe permet de répartir uniformément la force transmise par le dispositif de déplacement sélectif 160 sur les deux bras pivotants 140, assurant ainsi un déploiement synchronisé des roues 120.

De cette manière, le dispositif de déplacement sélectif 160 peut déplacer la paire de bras pivotants 140 entre une position de transport et une position de fonctionnement.

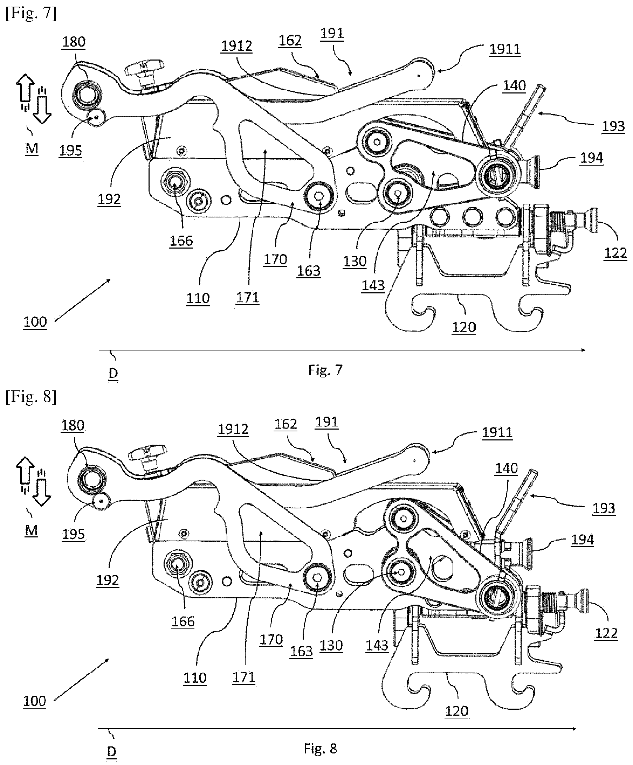

En particulier, dans la position de transport, comme illustré sur la figure 7, la partie distale 142 de la paire de bras pivotants 140 est sensiblement orientée dans la direction longitudinale D du corps principal 110.

Dans une mise en œuvre particulière, la partie distale 142 de la paire de bras pivotants 140 est sensiblement orientée vers le haut.

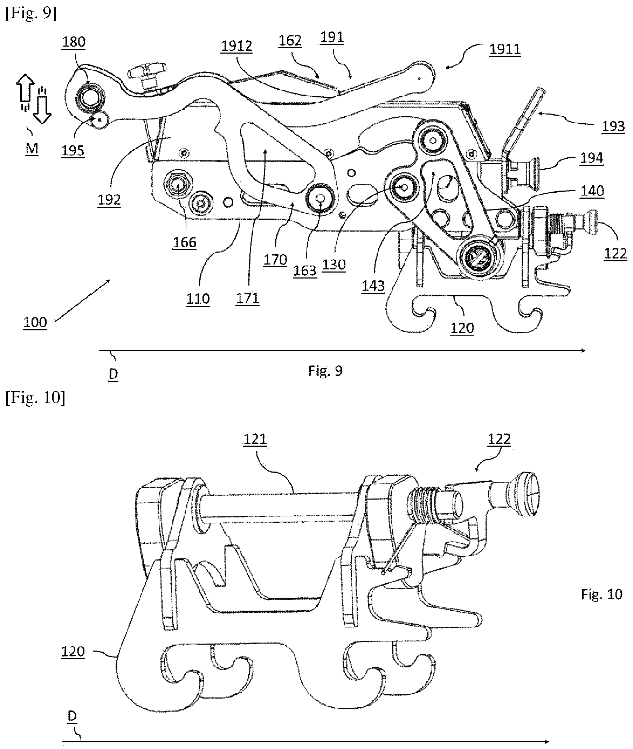

Par ailleurs, dans la position de fonctionnement, comme illustré sur la figure 8 et la figure 9, la partie distale 142 de la paire de bras pivotants 140 est sensiblement orientée vers le sol, de sorte que les roues 50 entrent en contact avec le sol et que le patin de train d'atterrissage 10 est soulevé du sol.

En particulier, l'exemple de la figure 8 illustre la paire de bras pivotants 140 en position intermédiaire, entre la position de transport et la position de fonctionnement.

Par ailleurs, la figure 9 illustre la paire de bras pivotants 140 en position de fonctionnement.

### Le levier de commande

Comme illustré sur la figure 4, la figure 7, la figure 8, la figure 9, la figure 11 et la figure 13, le levier de commande 170 s'étend le long de la direction longitudinale D du corps principal 110.

Dans l'exemple des figures 4, 7 à 9, 11 et 13, le levier de commande 170 est disposé dans la partie avant 300 du corps principal 110.

Toutefois, selon les besoins et les ressources disponibles, on pourra envisager de disposer le levier de commande 170 ailleurs entre la partie arrière 200 et la partie avant 300 du corps principal 110, et ce, sans nécessiter de modifications substantielles de l'invention.

En outre, le levier de commande 170 est conçu pour transmettre un mouvement d'actionnement alternatif vertical M (c.-à-d., un mouvement alternatif de « monte et baisse » similaire à un mouvement de pompage), au dispositif de déplacement sélectif 160. Le mouvement de va-et-vient vertical M du levier de commande 170, répété de haut en bas, permet de transmettre l'effort de l'opérateur au dispositif de déplacement 160 de manière optimale. Contrairement à un mouvement de levier horizontal, le mouvement de va-et-vient vertical M tire pleinement parti du poids du corps et de la force des jambes, rendant l'actionnement moins fatigant.

Dit autrement, le levier de commande 170 est conçu pour se déplacer selon un mouvement alternatif vertical M dans une direction verticale par rapport à la direction longitudinale D du corps principal 110. La direction de va-et-vient vertical, perpendiculaire à l'axe principal du dispositif de manœuvre au sol 100, permet un actionnement efficace tout en maintenant un encombrement réduit. Le levier de commande 170 reste ainsi proche du corps 110, facilitant l'utilisation même dans des espaces restreints. De plus, le mouvement de va-et-vient vertical M ne nécessite pas d'effort latéral pouvant déséquilibrer l'opérateur ou le dispositif de manœuvre au sol 100 lors de l'actionnement.

Dans l'invention, le levier de commande 170 est couplé à au moins un élément de rappel tel un ressort de rappel. Ce ressort exerce une force de rappel sur le levier 170, tendant à le ramener vers sa position initiale après chaque actionnement. Cela permet d'enchaîner facilement les mouvements de pompage sans avoir à repositionner manuellement le levier entre chaque action.

Ainsi, le levier de commande 170 peut être couplé à deux ou plus de deux éléments de rappel, répartis de manière à équilibrer les efforts et assurer un rappel stable et régulier du levier. Plusieurs ressorts peuvent être utilisés en parallèle pour ajuster précisément la force de rappel souhaitée.

Dans une première façon de réaliser l'invention, lorsque le mouvement alternatif vertical M atteint le point bas, le levier de commande 170 est ramené automatiquement vers le point haut sous l'effet de l'élément de rappel. Durant la phase descendante du pompage, l'opérateur comprime le ressort. Une fois arrivé en butée basse, l'opérateur relâche son effort et le ressort se détend, poussant le levier vers le haut jusqu'à sa position de départ, prêt pour un nouveau cycle de pompage.

Dans une deuxième façon de réaliser l'invention, lorsque le mouvement alternatif vertical M atteint le point haut, le levier de commande 170 est ramené automatiquement vers le point bas sous l'effet de l'élément de rappel. Dans cette variante, le ressort agit en traction. Lors de la phase montante, l'opérateur étire le ressort. Arrivé en butée haute, il relâche le levier qui redescend par la traction du ressort jusqu'au point bas, prêt pour le pompage suivant. Cette configuration peut être avantageuse ergonomiquement en accompagnant le mouvement descendant.

Dans un mode de réalisation de l'invention, comme illustré sur la figure 4, la figure 7, la figure 8, la figure 9, la figure 11 et la figure 12, le levier de commande 170 se présente sous forme d'une plaque qui comprend au moins une deuxième ouverture d'allègement 171.

Ainsi, dans ce mode de réalisation de l'invention, le levier de commande 170 peut comprendre deux ou plus de deux deuxièmes ouvertures d'allègement 171.

### La pédale

Comme illustré sur la figure 4, la figure 7, la figure 8, la figure 9, la figure 11 et la figure 12, la pédale 180 est distincte du levier de commande 170 tout en y étant reliée de manière solidaire.

En outre, la pédale 180 est conçue pour être actionnée par un opérateur de manière à amorcer et imprimer au levier de commande 170 le mouvement alternatif vertical M répété qui actionne le levier de commande 170.

### Premier mode de réalisation de l'invention : l'élément de fixation est monté pivotant par rapport au corps principal

Dans le premier mode de réalisation de l'invention, comme illustré sur la figure 4 et la figure 10, le dispositif de manœuvre au sol 100 comprend en outre un premier axe de rotation 121 et au moins un élément de verrouillage 122.

Ainsi, dans le premier mode de réalisation de l'invention, le dispositif de manœuvre au sol 100 peut comprendre un premier axe de rotation 121 et deux ou plus de deux éléments de verrouillage 196.

En pratique, le premier axe de rotation 121 s'étend dans la direction longitudinale D du corps principal 110.

Dans l'exemple des figures 4 et 10, le premier axe de rotation 121 est disposé dans la partie arrière 200 du corps principal 110.

Toutefois, selon les besoins et les ressources disponibles, on pourra envisager de disposer le premier axe de rotation 121 ailleurs entre la partie arrière 200 et la partie avant 300 du corps principal 110, et ce, sans nécessiter de modifications substantielles de l'invention.

Par ailleurs, le premier axe de rotation 121 est relié à l'élément de fixation 120 de sorte que l'élément de fixation 120 peut tourner autour du premier axe de rotation 121 dans une plage angulaire prédéterminée.

Dans un exemple, l'élément de fixation 120 peut tourner autour du premier axe de rotation 121 dans une plage angulaire prédéterminée de 30° ou moins, de préférence 25° ou moins, de préférence 20° ou moins, de préférence 15° ou moins, de préférence 10° ou moins.

Toutefois, selon les besoins et les ressources disponibles, on pourra envisager d'utiliser d'autres valeurs de la plage angulaire prédéterminée, et ce, sans nécessiter de modifications substantielles de l'invention.

En pratique, l'élément de verrouillage 122 est conçu pour verrouiller en rotation l'élément de fixation 120 de manière désolidarisable de sorte que l'élément de fixation 120 peut évoluer entre une position d'accrochage et une position libre.

En particulier, dans la position d'accrochage, l'élément de fixation 120 est accroché au patin de train d'atterrissage 10 et l'élément de verrouillage 122 verrouille en rotation l'élément de fixation 120.

Par ailleurs, dans la position libre, l'élément de verrouillage 122 laisse libre l'élément de fixation 120.

### Deuxième mode de réalisation de l'invention : un dispositif de traction rotatif

Dans le deuxième mode de réalisation de l'invention, comme illustré sur la figure 4, la figure 7, la figure 8, la figure 9, la figure 11 et la figure 12, le dispositif de manœuvre au sol 100 comprend en outre un axe de rotation d'un dispositif de traction 190 et un dispositif de traction rotatif 191 à prise manuelle.

Dans un exemple, le dispositif de traction rotatif 191 comprend au moins une poignée de manutention.

En pratique, l'axe de rotation du dispositif de traction 190 s'étend le long de la direction transversale du corps principal 110.

Dans l'exemple des figures 4 et 11 à 12, l'axe de rotation du dispositif de traction 190 est disposé dans la partie avant 300 du corps principal 110.

Toutefois, selon les besoins et les ressources disponibles, on pourra envisager de disposer l'axe de rotation du dispositif de traction 190 ailleurs entre la partie arrière 200 et la partie avant 300 du corps principal 110, et ce, sans nécessiter de modifications substantielles de l'invention.

En pratique, le dispositif de traction rotatif 191 à prise manuelle comprend au moins une première poignée de traction 1911 et au moins un bras longitudinal 1912.

En pratique, le bras longitudinal 1912 présente une première extrémité et une deuxième extrémité.

En particulier, la première poignée de traction 1911 est reliée à la première extrémité du bras longitudinal 1912.

Par ailleurs, l'axe de rotation du dispositif de traction 190 est relié à la deuxième extrémité du bras longitudinal 1912.

Dans une première façon particulière, l'axe de rotation du dispositif de traction 190 est conçu pour tourner dans la direction transversale et est relié à la deuxième extrémité du bras longitudinal 1912 de manière solidaire en rotation.

Dit autrement, le bras longitudinal 1912 est fixé de manière à tourner avec l'axe de rotation du dispositif de traction 190, sans pouvoir bouger indépendamment de sorte que lorsque l'axe de rotation du dispositif de traction 190 tourne, le bras longitudinal 1912 se déplace également en rotation.

Dans une deuxième façon particulière, l'axe de rotation du dispositif de traction 190 est fixe et est relié à la deuxième extrémité du bras longitudinal 1912 de sorte que le bras longitudinal 1912 peut tourner autour de l'axe de rotation du dispositif de traction 190.

En outre, le dispositif de traction rotatif 191 à prise manuelle est conçu pour être déplacé en rotation entre au moins une position repliée et une position déployée.

En particulier, dans la position repliée (illustrée sur la figure 1, la figure 2, la figure 3, la figure 4, la figure 7, la figure 8 et la figure 9), le dispositif de traction rotatif 191 à prise manuelle est replié sur le corps principal 110.

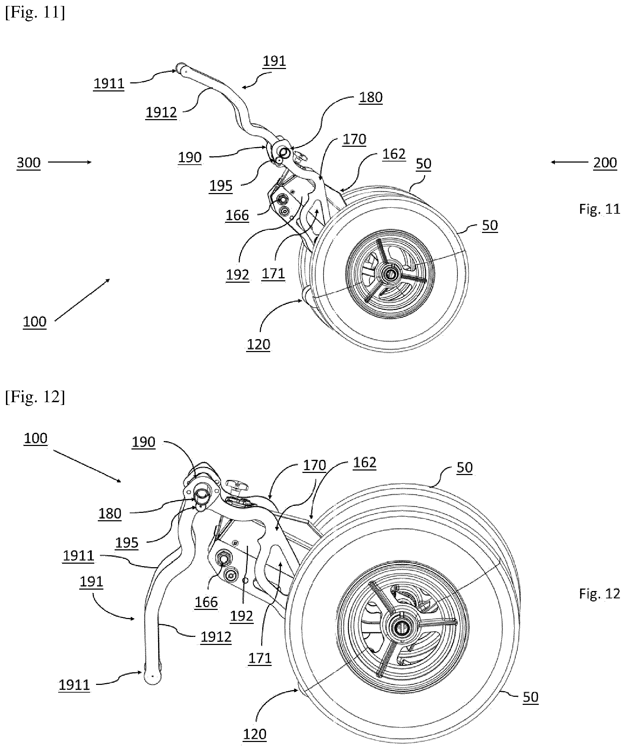

Par ailleurs, dans la position déployée (illustrée sur la figure 11), le dispositif de traction rotatif 191 à prise manuelle s'éloigne du corps principal 110 en faisant saillie longitudinalement du corps principal 110.

En particulier, dans l'exemple de la figure 11, le dispositif de traction rotatif 191 à prise manuelle fiat saillie longitudinalement de la partie avant 300 du corps principal 110.

En particulier, dans la position déployée, le corps principal 110 peut être incliné par rapport au sol et peut être tiré par le dispositif de traction rotatif 191 à prise manuelle dans une position de mouvement roulant incliné.

De cette manière, l'opérateur peut faire rouler le dispositif de manœuvre au sol 100 jusqu'à un emplacement souhaité en poussant ou en tirant le dispositif de traction rotatif 191 à prise manuelle dans une direction souhaitée.

Dans un exemple du deuxième mode de réalisation, la différence angulaire de position du dispositif de traction rotatif 191 à prise manuelle entre la position repliée et la position déployée est de 180° ou moins.

Toutefois, selon les besoins et les ressources disponibles, on pourra envisager d'utiliser d'autres valeurs de la différence angulaire, et ce, sans nécessiter de modifications substantielles de l'invention.

Dans une variante du deuxième mode de réalisation, comme illustré sur la figure 12, le dispositif de traction rotatif 191 à prise manuelle est en outre conçu pour être déplacé dans une position de stabilisation, depuis la position déployée ou depuis la position repliée.

En particulier, dans la position de stabilisation, le corps principal 110 peut être incliné par rapport au sol et le dispositif de traction rotatif 191 à prise manuelle entre en contact avec le sol au niveau de son extrémité distale et supporte le corps principal 110.

Dans un premier exemple de la variante du deuxième mode de réalisation, la différence angulaire de position du dispositif de traction rotatif 191 à prise manuelle entre la position déployée et la position de stabilisation est de 90° ou moins.

Dans un deuxième exemple de la variante du deuxième mode de réalisation, la différence angulaire de position du dispositif de traction rotatif 191 à prise manuelle entre la position repliée et la position de stabilisation est de 270° ou moins.

Toutefois, selon les besoins et les ressources disponibles, on pourra envisager d'utiliser d'autres valeurs de la différence angulaire, et ce, sans nécessiter de modifications substantielles de l'invention.

### Troisième mode de réalisation de l'invention : le dispositif de déplacement sélectif comprend un vérin hydraulique

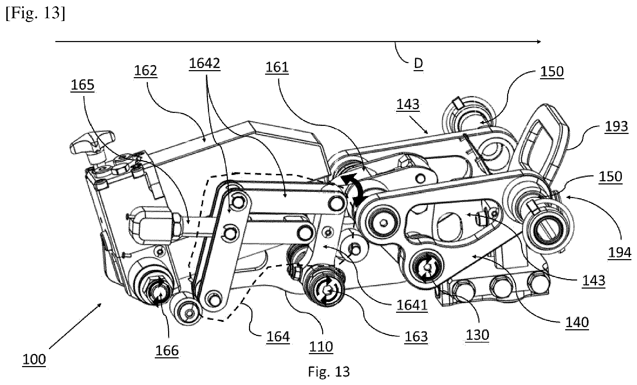

Dans le troisième mode de réalisation de l'invention, comme illustré sur la figure 13, le dispositif de déplacement sélectif 160 comprend au moins un vérin hydraulique 161.

Ainsi, dans le troisième mode de réalisation de l'invention, le dispositif de déplacement sélectif 160 peut comprendre deux ou plus de deux vérins hydrauliques 161.

En pratique, le vérin hydraulique 161 comprend au moins un piston extensible et au moins une tige de vérin qui est reliée au piston extensible.

Ainsi, le vérin hydraulique 161 peut comprendre deux ou plus de deux pistons extensibles et deux ou plus de deux tiges de vérin.

Dans un premier exemple, le vérin hydraulique 161 est un vérin à simple effet.

Dans un deuxième exemple, le vérin hydraulique 161 est un vérin à double effet.

En pratique, le piston extensible présente une extrémité qui est conçue pour agir sur la paire de bras pivotants 140 de manière à déplacer la paire de bras pivotants 140 entre la position de transport et la position de fonctionnement, comme expliqué ci-dessus.

Dans une variante du troisième mode de réalisation de l'invention, comme illustré sur la figure 2, la figure 3, la figure 4, la figure 7, la figure 8, la figure 9, ma figure 11, la figure 12 et la figure 13, le dispositif de déplacement sélectif 160 comprend en outre au moins un réservoir 162 de fluide hydraulique (p. ex. de l'huile), un axe rotatif d'actionnement d'une pompe hydraulique 163, un système de transmission de mouvement 164 et au moins une pompe hydraulique 165.

Ainsi, dans la variante du troisième mode de réalisation de l'invention, le dispositif de manœuvre au sol 100 peut comprendre deux ou plus de deux réservoirs 162 de fluide hydraulique, un axe rotatif d'actionnement de la pompe hydraulique 163, un système de transmission de mouvement 164 et deux ou plus de deux pompes hydrauliques 165.

Comme illustré sur la figure 13,l'axe rotatif d'actionnement de la pompe hydraulique 163 s'étend le long de la direction transversale du corps principal 110.

Dans l'exemple des figures 2 à 4, 7 à 9, et 11 à 13,l'axe rotatif d'actionnement de la pompe hydraulique 163 est disposé dans la partie avant 300 du corps principal 110.

Toutefois, selon les besoins et les ressources disponibles, on pourra envisager de disposer l'axe rotatif d'actionnement de la pompe hydraulique 163 ailleurs entre la partie arrière 200 et la partie avant 300 du corps principal 110, et ce, sans nécessiter de modifications substantielles de l'invention.

En outre, l'axe rotatif d'actionnement de la pompe hydraulique 163 est conçu pour tourner dans la direction transversale.

Par ailleurs, l'axe rotatif d'actionnement de la pompe hydraulique 163 est relié au levier de commande 170 de manière solidaire en rotation.

Dit autrement, le levier de commande 170 est fixé de manière à tourner avec le l'axe rotatif d'actionnement de la pompe hydraulique 163, sans pouvoir bouger indépendamment de sorte que lorsque l'axe rotatif d'actionnement de la pompe hydraulique 163 tourne, le levier de commande 170 se déplace également en rotation.

En pratique, le système de transmission de mouvement 164 est relié à l'axe rotatif d'actionnement de la pompe hydraulique 163.

En outre, le système de transmission de mouvement 164 est conçu pour transformer la rotation de l'axe rotatif d'actionnement de la pompe hydraulique 163 en un mouvement linéaire.

Dans une façon particulière du système de transmission de mouvement 164, comme illustré sur la figure 13, le système de transmission de mouvement 164 comprend au moins un levier de transmission 1641 et une pluralité de biellettes 1642.

En pratique, dans la façon particulière du système de transmission de mouvement 164, le levier de transmission 1641 est relié à l'axe rotatif d'actionnement de la pompe hydraulique 163 de manière solidaire en rotation.

Dit autrement, le levier de transmission 1641 est fixé de manière à tourner avec l'axe rotatif d'actionnement de la pompe hydraulique 163, sans pouvoir bouger indépendamment de sorte que lorsque l'axe rotatif d'actionnement de la pompe hydraulique 163 tourne, le levier de transmission 1641 se déplace également en rotation.

En outre, dans la façon particulière du système de transmission de mouvement 164, au moins une biellette 1642 de la pluralité de biellettes 1642 relie le levier de transmission 1641 à la pompe hydraulique 165.

En pratique, la pompe hydraulique 165 est reliée au système de transmission de mouvement 164 et au réservoir 162 de fluide hydraulique.

Par ailleurs, la pompe hydraulique 165 est conçue pour alimenter le dispositif de déplacement sélectif 160 en fluide hydraulique à partir du réservoir 162 de fluide hydraulique.

D'autre part, la pompe hydraulique 165 est conçue pour être actionnée par le système de transmission de mouvement 164.

Au vu de ce qui précède, on comprend que la pédale 180 est reliée au levier de commande 170, lui-même relié à l'axe rotatif d'actionnement de la pompe hydraulique 163, lui-même relié au système de transmission de mouvement 164, qui est lui-même relié à la pompe hydraulique 165.

Ainsi, dans un premier exemple, lorsque la pédale 180 est déplacée jusqu'au point bas, la pompe hydraulique 165 aspire le fluide hydraulique du réservoir 162 de fluide hydraulique, puis, lorsque la pédale 180 est déplacée jusqu'au point haut, la pompe hydraulique 165 alimente le dispositif de déplacement sélectif 160 avec tout ou partie du fluide hydraulique aspiré.

Aussi, dans un deuxième exemple, lorsque la pédale 180 est déplacée jusqu'au point haut, la pompe hydraulique 165 aspire le fluide hydraulique du réservoir 162 de fluide hydraulique, puis, lorsque la pédale 180 est déplacée jusqu'au point bas, la pompe hydraulique 165 alimente le dispositif de déplacement sélectif 160 avec tout ou partie du fluide hydraulique aspiré.

Dans une façon de mettre en œuvre la variante du troisième mode de réalisation de l'invention, comme illustré sur la figure 4, la figure 7, la figure 8, la figure 9, la figure 11, la figure 12 et la figure 13, le dispositif de déplacement sélectif 160 comprend en outre un troisième axe de rotation 166.

En pratique, le troisième axe de rotation 166 s'étend le long d'une direction transversale du corps principal 110.

Par ailleurs, le troisième axe de rotation 166 est relié à une partie d'extrémité de la tige de vérin de sorte que la tige de vérin peut tourner autour du premier axe de rotation 121 dans une plage angulaire prédéterminée.

Dans un exemple, la tige de vérin peut tourner dans une plage angulaire prédéterminée de 20° ou moins, de préférence 15° ou moins, de préférence 10° ou moins.

Toutefois, selon les besoins et les ressources disponibles, on pourra envisager d'utiliser d'autres valeurs de la plage angulaire prédéterminée, et ce, sans nécessiter de modifications substantielles de l'invention.

### Conclusion

Nous avons décrit et illustré l'invention. Toutefois, l'invention ne se limite pas aux formes de réalisations que nous avons présentées. En effet, de nombreuses combinaisons des variantes, alternatives, modes de réalisation et mises en œuvre, peuvent être envisagées sans nécessiter de modifications substantielles de l'invention. Ainsi, un expert du domaine peut déduire d'autres variantes, alternatives, modes de réalisation et mises en œuvre, à la lecture de la description et des figures annexées et en fonction des contraintes économiques, ergonomiques, dimensionnelles à respecter.

En particulier, lorsqu'un élément est « conçu » pour remplir une fonction particulière, cela signifie que cet élément est créé spécifiquement dans le but de remplir cette fonction particulière.

Toutefois, selon les besoins et les ressources disponibles, on pourra envisager d'utiliser un élément existant, que l'on modifiera ou adaptera pour remplir cette fonction particulière, et ce, sans nécessiter de modifications substantielles de l'invention.

L'invention peut faire l'objet de nombreuses variantes et applications autres que celles décrites ci-dessus. En particulier, sauf indication contraire, les différentes caractéristiques structurelles et fonctionnelles de chaque façon particulière décrite ci-dessus ne doivent pas être considérées comme combinées et/ou étroitement et/ou inextricablement liées les unes aux autres, mais, au contraire, comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

Dans une première façon particulière de mettre en œuvre l'invention, comme illustré sur la figure 2, la figure 3, la figure 4, la figure 7, la figure 8, la figure 9, la figure 11 et la figure 12, le dispositif de manœuvre au sol 100 comprend un capot extérieur qui enveloppe le dispositif de déplacement sélectif 160 de manière à protéger tout ou partie du dispositif de déplacement sélectif 160 de l'extérieur.

Dans une deuxième façon particulière de mettre en œuvre l'invention, l'élément de fixation 120 comprend le premier axe de rotation 121 et l'élément de verrouillage 122.

Dans une troisième façon particulière de mettre en œuvre l'invention, comme illustré sur la figure 4, la figure 7, la figure 8, la figure 9 et la figure 13, le dispositif de manœuvre au comprend en outre une deuxième poignée de traction 193.

Dans l'exemple des figures 4, 7 et 9 à 13, la deuxième poignée de traction 193 est disposée et agencée dans la partie arrière 200 du corps principal 110, à l'opposé de la pédale 180, de sorte que l'opérateur peut saisir, en même temps, la pédale 180 et la deuxième poignée de traction 193 pour transporter le dispositif de manœuvre au sol 100 et/ou positionner le dispositif de manœuvre au sol 100 sur le patin de train d'atterrissage 10.

Toutefois, selon les besoins et les ressources disponibles, on pourra envisager de disposer et agencer la pédale 180 et la deuxième poignée de traction 193 ailleurs entre la partie arrière 200 et la partie avant 300 du corps principal 110, et ce, sans nécessiter de modifications substantielles de l'invention.

Dans une quatrième façon particulière de mettre en œuvre l'invention, comme illustré sur la figure 4, la figure 7, la figure 8, la figure 9 et la figure 13, le dispositif de manœuvre au sol 100 comprend en outre un premier dispositif de verrouillage 194, tel qu'un doigt de verrouillage, qui maintient la paire de bras pivotants 140 dans la position de fonctionnement. Le premier dispositif de verrouillage 194 assure que les bras pivotants 140 restent déployés de manière stable pendant l'utilisation du dispositif de manœuvre au sol 100, empêchant tout repliement intempestif qui pourrait déstabiliser l'appareil à patins de train d'atterrissage soulevé.

Dans un exemple de la quatrième façon particulière de mettre en œuvre l 'invention, lors du passage de la position de transport à la position de fonctionnement, tout ou partie de la partie distale 142 de la paire de bras pivotants 140 agit sur le premier dispositif de verrouillage 194 pour le faire sortir d'un trou ou un perçage qui est formé dans le corps principal 110. Pendant le déploiement des bras pivotants 140, leur partie distale 142 vient pousser le doigt de verrouillage 194 hors de son logement, contre la force d'un ressort de rappel. Puis, lorsque la paire de bras pivotants 140 est dans la position de fonctionnement, la partie distale 142 de la paire de bras pivotants 140 autorise le premier dispositif de verrouillage 194 à se mettre en prise avec le trou ou le perçage qui est formé dans le corps principal 110, le ressort ramenant automatiquement le doigt 194 dans son logement pour verrouiller les bras 140. Ce mécanisme fournit un verrouillage automatique et sûr des bras pivotants 140 en position déployée, sans action supplémentaire de l'opérateur.

Dans une cinquième façon particulière de mettre en œuvre l'invention, comme illustré sur la figure 4, la figure 7, la figure 8, la figure 9, la figure 11 et la figure 12, le dispositif de manœuvre au sol 100 comprend un deuxième dispositif de verrouillage 195, tel qu'un doigt de verrouillage, qui maintient le dispositif de traction rotatif 191 à prise manuelle dans la position repliée, dans la position déployée ou dans la position de stabilisation. Le deuxième dispositif de verrouillage 195 permet de bloquer de manière sûre le dispositif de traction rotatif 191 à prise manuelle dans différentes positions prédéfinies adaptées à chaque utilisation : position repliée compacte pour le transport et le stockage, position déployée pour tracter et manœuvrer aisément le dispositif, et position intermédiaire de stabilisation pour immobiliser le dispositif lors des phases de levage.

Dans un exemple de la cinquième façon particulière de mettre en œuvre l'invention, le deuxième dispositif de verrouillage 195 est conçu pour se mettre en prise dans un trou ou un perçage qui est formé dans le levier de commande 170. Des trous correspondants aux différentes positions de la poignée 191 sont prévus dans le levier de commande 170. Le deuxième dispositif de verrouillage 195, poussé par un ressort, s'insère automatiquement dans ces trous lorsque la poignée atteint une position prédéfinie. Pour changer de position, l'opérateur tire le doigt 195 pour le désengager du trou et libérer la rotation du dispositif de traction rotatif 191 à prise manuelle jusqu'au trou suivant où le doigt 195 se réengage automatiquement, bloquant à nouveau le dispositif de traction rotatif 191 à prise manuelle de manière sûre et stable.

## Revendications

1. Dispositif de manœuvre au sol (100) conçu pour soulever un patin de train d'atterrissage (10) d'un appareil à patins de train d'atterrissage afin de le manœuvrer au sol, le patin de train d'atterrissage (10) étant préalablement en contact avec le sol et résistant à la traction, le dispositif de manœuvre au sol (100) comprenant,
- un corps principal (110) qui s'étend le long d'une direction longitudinale, D, entre une partie arrière (200) et une partie avant (300), et qui est conçu pour être disposé sur le patin de train d'atterrissage (10),
- au moins un élément de fixation (120) qui est relié au corps principal (110) et conçu pour être accroché au patin de train d'atterrissage (10) de manière désolidarisable,
- un premier axe rotatif (130) qui s'étend le long d'une direction transversale du corps principal (110) et qui est conçu pour tourner dans la direction transversale,
- une paire de bras pivotants (140), chaque bras pivotant (140) présentant une partie proximale (141) et une partie distale (142), les bras pivotants (140) étant reliés l'un à l'autre en parallèle, de manière solidaire en rotation, par leur partie proximale (141), au premier axe rotatif (130),
- une paire d'essieux (150), chaque essieu (150) présentant une extrémité proximale (151) et une extrémité distale (152),
• l'extrémité proximale (151) étant reliée de manière solidaire à la partie distale (142) d'un bras pivotant (140) respectif, et
• l'extrémité distale (152) étant reliée à une roue (50) respective de sorte que la roue (50) peut tourner librement autour de l'essieu (150),
- au moins un dispositif de déplacement sélectif (160) de la paire de bras pivotants (140) par rapport au corps principal (110), le dispositif de déplacement sélectif (160) étant disposé à l'intérieur du corps principal (110) et conçu pour agir sur la paire de bras pivotants (140) afin de la faire pivoter en rotation, autour du premier axe rotatif (130), par rapport au corps principal (110), de manière à déplacer la paire de bras pivotants (140) entre,
• une position de transport dans laquelle la partie distale (142) de la paire de bras pivotants (140) est sensiblement orientée dans la direction longitudinale, D, et
• une position de fonctionnement dans laquelle la partie distale (142) de la paire de bras pivotants (140) est sensiblement orientée vers le sol, de sorte que les roues (50) entrent en contact avec le sol et que le patin de train d'atterrissage (10) est soulevé du sol,
- au moins un levier de commande (170) qui s'étend le long de la direction longitudinale, D, du corps principal (110) et qui est conçu pour se déplacer selon un mouvement alternatif vertical, M, répété, de monte et baisse, dans une direction verticale par rapport à la direction longitudinale, D, du corps principal (110), chaque cycle du mouvement alternatif vertical, M, répété comprenant une phase de montée et une phase de baisse successives, pour actionner le dispositif de déplacement sélectif (160), le dispositif de manœuvre au sol (100) étant **caractérisé en ce qu'**il comprend
- au moins un élément de rappel couplé au levier de commande (162) et conçu pour ramener automatiquement le levier de commande (162) soit vers un point haut quand la phase de baisse du mouvement alternatif vertical, M, répété atteint un point bas, soit vers le point bas quand la phase de montée du mouvement alternatif vertical, M, répété atteint le point haut, de sorte que le mouvement alternatif vertical, M, du levier de commande (170) est automatiquement répété par alternance d'application et de relâchement d"une force externe par un opérateur sur le levier de commande (170),
dans lequel, le dispositif de déplacement sélectif (160) est conçu pour convertir une pluralité de cycles du mouvement alternatif vertical en un déplacement complet de la paire de bras pivotants (140) entre la position de transport et la position de fonctionnement.

2. Dispositif de manoeuvre au sol (100) selon la revendication 1 comprenant, au moins une pédale (180), distincte du levier de commande (170), qui est reliée de manière solidaire au levier de commande (170) et qui est conçue pour être actionnée par l'opérateur de manière à amorcer et imprimer au levier de commande (170) le mouvement alternatif vertical, M, répété qui actionne le dispositif de déplacement sélectif (160).

3. Dispositif de manoeuvre au sol (100) selon l'une quelconque des revendications 1 à 2, comprenant en outre un premier dispositif de verrouillage (194) qui maintient la paire de bras pivotants (140) dans la position de fonctionnement, le premier dispositif de verrouillage (194) étant conçu pour,
- lors du passage de la position de transport à la position de fonctionnement, être poussé hors d'un logement formé dans le corps principal (110) par tout ou partie de la partie distale (142) de la paire de bras pivotants (140) contre la force d'un ressort de rappel,
- puis, lorsque la paire de bras pivotants (140) est dans la position de fonctionnement, être ramené automatiquement par le ressort de rappel dans le logement formé dans le corps principal (110) pour verrouiller la paire de bras pivotants (140) dans la position de fonctionnement.

4. Dispositif de manœuvre au sol (100) selon l'une quelconque des revendications 1 à 3 comprenant,
- un premier axe de rotation (121) qui s'étend dans la direction longitudinale, D, du corps principal (110) et qui est relié à l'élément de fixation (120) de sorte que l'élément de fixation peut tourner autour du premier axe de rotation (121) dans une plage angulaire prédéterminée, et
- au moins un élément de verrouillage (122) qui est conçu pour verrouiller en rotation l'élément de fixation (120) de manière désolidarisable de sorte que l'élément de fixation (120) peut évoluer entre,
• une position d'accrochage dans laquelle,
▪ l'élément de fixation (120) est accroché au patin de train d'atterrissage (10), et
▪ l'élément de verrouillage (122) verrouille en rotation l'élément de fixation (120),
• une position libre dans laquelle l'élément de verrouillage (122) laisse libre l'élément de fixation (120).

5. Dispositif de manœuvre au sol (100) selon la revendication 4, dans lequel, l'élément de fixation (120) comprend le premier axe de rotation (121) et l'élément de verrouillage (122).

6. Dispositif de manœuvre au sol (100) selon l'une quelconque des revendications 1 à 5, comprenant,
- un axe de rotation d'un dispositif de traction (190) qui s'étend le long d'une direction transversale du corps principal (110), et
- un dispositif de traction rotatif (191) à prise manuelle qui comprend au moins une première poignée de traction (1911) et au moins un bras longitudinal (1912), le bras longitudinal (1912) présentant une première extrémité et une deuxième extrémité, la première poignée de traction (1911) étant reliée à la première extrémité du bras longitudinal (1912), l'axe de rotation du dispositif de traction (190) étant relié à la deuxième extrémité du bras longitudinal (1912), dans lequel, le dispositif de traction rotatif (191) à prise manuelle est conçu pour être déplacé en rotation entre au moins,
• une position repliée dans laquelle le dispositif de traction rotatif (191) à prise manuelle est replié sur le corps principal (110), et
• une position déployée dans laquelle,
▪ le dispositif de traction rotatif (191) à prise manuelle s'éloigne du corps principal (110) en faisant saillie longitudinalement du corps principal (110), et
▪ le corps principal (110) peut être incliné par rapport au sol et peut être tiré par le dispositif de traction rotatif (191) à prise manuelle dans une position de mouvement roulant incliné, de manière à permettre à l'opérateur de faire rouler le dispositif de manœuvre au sol (100) jusqu'à un emplacement souhaité en poussant ou en tirant le dispositif de traction rotatif (191) à prise manuelle dans une direction souhaitée.

7. Dispositif de manœuvre au sol (100) selon la revendication 6, dans lequel la différence angulaire de position du dispositif de traction rotatif (191) à prise manuelle entre la position repliée et la position déployée est de 180° ou moins.

8. Dispositif de manœuvre au sol (100) selon l'une quelconque des revendications 6 à 7, dans laquelle le dispositif de traction rotatif (191) à prise manuelle est en outre conçue pour être déplacée dans une position de stabilisation, depuis la position déployée ou depuis la position repliée, dans laquelle,
- le corps principal (110) peut être incliné par rapport au sol, et
- le dispositif de traction rotatif (191) à prise manuelle entre en contact avec le sol au niveau de son extrémité distale et supporte le corps principal (110).

9. Dispositif de manœuvre au sol (100) selon la revendication 8, dans lequel la différence angulaire de position du dispositif de traction rotatif (191) à prise manuelle entre la position déployée et la position de stabilisation est de 90° ou moins.

10. Dispositif de manœuvre au sol (100) selon l'une quelconque des revendications 6 à 9, comprenant en outre un deuxième dispositif de verrouillage (195), qui maintient le dispositif de traction rotatif (191) à prise manuelle dans une position repliée, une position déployée ou une position de stabilisation, le deuxième dispositif de verrouillage (195) étant conçu pour,
- se mettre en prise dans des trous correspondant auxdites positions du dispositif de traction rotatif (191) et formés dans le levier de commande (170),
- être poussé par un ressort pour s'insérer automatiquement dans l'un desdits trous lorsque le dispositif de traction rotatif (191) atteint l'une desdites positions, et
- être tiré par un opérateur pour se désengager du trou et permettre la rotation du dispositif de traction rotatif (191) jusqu'à un autre desdits trous.

11. Dispositif de manœuvre au sol (100) selon l'une quelconque des revendications 6 à 10, comprenant en outre une deuxième poignée de traction (193) qui est disposée et agencée sur le corps principal (110) de sorte que l'opérateur peut saisir, en même temps, la pédale (180) et la deuxième poignée de traction (193) pour transporter le dispositif de manœuvre au sol (100) et/ou positionner le dispositif de manœuvre au sol (100) sur le patin de train d'atterrissage (10).

12. Dispositif de manœuvre au sol (100) selon l'une quelconque des revendications 1 à 11, dans lequel le dispositif de déplacement sélectif (160) comprend au moins un vérin hydraulique (161) qui comprend,
- au moins un piston extensible qui présente une extrémité qui est conçue pour agir sur la paire de bras pivotants (140) de manière à déplacer la paire de bras pivotants (140) entre la position de transport et la position de fonctionnement,
- au moins une tige de vérin qui est reliée au piston extensible.
- au moins un réservoir (162) de fluide hydraulique,
- un axe rotatif d'actionnement d'une pompe hydraulique (163) qui s'étend le long d'une direction transversale du corps principal (110) et qui est conçu pour tourner dans la direction transversale, l'axe rotatif d'actionnement de la pompe hydraulique (163) étant relié au levier de commande (170) de manière solidaire en rotation,
- un système de transmission de mouvement (164) qui est relié à l'axe rotatif d'actionnement de la pompe hydraulique (163) et qui est conçu pour transformer la rotation de l'axe rotatif d'actionnement de la pompe hydraulique (163) en un mouvement linéaire, et
- au moins une pompe hydraulique (165) qui est reliée au système de transmission de mouvement (164) et au réservoir (162) de fluide hydraulique, la pompe hydraulique (165) étant conçue pour,
• alimenter le dispositif de déplacement sélectif (160) en fluide hydraulique à partir du réservoir (162) de fluide hydraulique, et
• être actionnée par le système de transmission de mouvement (164).
dans lequel, le système de transmission de mouvement (164) comprend,
- au moins un levier de transmission (1641) qui est relié à l'axe rotatif d'actionnement de la pompe hydraulique (163) de manière solidaire en rotation, et
- une pluralité de biellettes (1642) dont au moins une biellette (1642) relie le levier de transmission (1641) à la pompe hydraulique (165).

13. Dispositif de manœuvre au sol (100) selon l'une quelconque des revendications 1 à 12, dans lequel chaque bras pivotant (140) se présente sous forme d'une plaque qui comprend au moins une première ouverture d'allègement (143).

14. Dispositif de manœuvre au sol (100) selon l'une quelconque des revendications 1 à 13, dans lequel le levier de commande (170) se présente sous forme d'une plaque qui comprend au moins une deuxième ouverture d'allègement (171).

## Patentansprüche

1. Bodenmanövriervorrichtung (100), die dazu ausgelegt ist, ein Landegestell (10) eines Fluggeräts mit Landegestellen aufzubocken, um dieses am Boden zu rangieren, wobei das Landegestell (10) zuvor den Boden berührte und zugfest ist, wobei die Bodenmanövriervorrichtung (100) umfasst
- einen Hauptkörper (110), der sich entlang einer Längsrichtung D zwischen einem hinteren Abschnitt (200) und einem vorderen Abschnitt (300) erstreckt und der dazu ausgelegt ist, an dem Landegestell (10) angeordnet zu werden,
- mindestens ein Befestigungselement (120), das mit dem Hauptkörper (110) verbunden und dazu ausgelegt ist, lösbar an dem Landegestell (10) eingehängt zu werden,
- eine erste Drehachse (130), die sich entlang einer Querrichtung des Hauptkörpers (110) erstreckt und die dazu ausgelegt ist, sich in der Querrichtung zu drehen,
- ein Paar Schwenkarme (140), wobei jeder Schwenkarm (140) einen proximalen Abschnitt (141) und einen distalen Abschnitt (142) aufweist, wobei die Schwenkarme (140) an ihren proximalen Abschnitten (141) parallel und drehfest miteinander mit der ersten Drehachse (130) verbunden sind,
- ein Paar Achsen (150), wobei jede Achse (150) ein proximales Ende (151) und ein distales Ende (152) aufweist,
• wobei das proximale Ende (151) fest mit dem distalen Abschnitt (142) eines jeweiligen Schwenkarms (140) verbunden ist, und
• wobei das distale Ende (152) mit einem jeweiligen Rad (50) derart verbunden ist, dass sich das Rad (50) frei um die Achse (150) drehen kann,
- mindestens eine Vorrichtung (160) zur selektiven Verschiebung des Paares Schwenkarme (140) relativ zu dem Hauptkörper (110), wobei die Vorrichtung zur selektiven Verschiebung (160) im Inneren des Hauptkörpers (110) angeordnet und zum Einwirken auf das Paar Schwenkarme (140) ausgelegt ist, um es um die erste Drehachse (130) relativ zu dem Hauptkörper (110) derart rotatorisch zu schwenken, dass das Paar Schwenkarme (140) verschoben wird zwischen
• einer Transportstellung, in welcher der distale Abschnitt (142) des Paares Schwenkarme (140) im Wesentlichen in der Längsrichtung D ausgerichtet ist, und
• einer Betriebsstellung, in welcher der distale Abschnitt (142) des Paares Schwenkarme (140) im Wesentlichen zu dem Boden hin ausgerichtet ist, so dass die Räder (50) den Boden berühren und das Landegestell (10) von dem Boden abhebt,
- mindestens einen Steuerhebel (170), der sich entlang der Längsrichtung D des Hauptkörpers (110) erstreckt und der dazu ausgelegt ist, sich in einer wiederholten vertikalen alternierenden Bewegung M auf und ab in einer zu der Längsrichtung D des Hauptkörpers (110) vertikalen Richtung zu verschieben, wobei jeder Zyklus der wiederholten vertikalen alternierenden Bewegung M eine Aufwärtsphase und eine Abwärtsphase umfasst, die einander folgen, um die Vorrichtung zur selektiven Verschiebung (160) zu betätigen,
wobei die Bodenmanövriervorrichtung (100) **dadurch gekennzeichnet ist, dass** sie umfasst
- mindestens ein Rückstellelement, das mit dem Steuerhebel (162) gekoppelt und dazu ausgelegt ist, den Steuerhebel (162) entweder in eine obere Position automatisch zurückzustellen, wenn die Abwärtsphase der wiederholten vertikalen alternierenden Bewegung M einen unteren Punkt erreicht, oder in die untere Position, wenn die Aufwärtsphase der wiederholten vertikalen alternierenden Bewegung M den oberen Punkt erreicht, so dass die vertikale alternierende Bewegung M des Steuerhebels (170) automatisch durch alternierende Anwendung und Lockerung einer äußeren Kraft durch einen Bediener auf den Steuerhebel (170) wiederholt wird,
wobei die Vorrichtung zur selektiven Verschiebung (160) dazu ausgelegt ist, eine Vielzahl von Zyklen der vertikalen alternierenden Bewegung in eine vollständige Verschiebung des Paares Schwenkarme (140) zwischen der Transportstellung und der Betriebsstellung umzuwandeln.

2. Bodenmanövriervorrichtung (100) nach Anspruch 1, die mindestens ein von dem Steuerhebel (170) verschiedenes Pedal (180) umfasst, das fest mit dem Steuerhebel (170) verbunden ist und das dazu ausgelegt ist, von dem Bediener derart betätigt werden zu können, dass die wiederholte vertikale alternierende Bewegung M, die die Vorrichtung zur selektiven Verschiebung (160) betätigt, gestartet und auf den Steuerhebel (170) übertragen wird.

3. Bodenmanövriervorrichtung (100) nach einem der Ansprüche 1 bis 2, die ferner eine erste Verriegelungsvorrichtung (194) umfasst, die das Paar Schwenkarme (140) in der Betriebsstellung hält, wobei die erste Verriegelungsvorrichtung (194) dazu ausgelegt ist, um
- bei dem Wechsel aus der Transportstellung in die Betriebsstellung von dem gesamten oder einem Teil des distalen Abschnitts (142) des Paares Schwenkarme (140) gegen die Kraft einer Rückstellfeder aus einer in dem Hauptkörper (110) ausgebildeten Aufnahme herausgedrückt zu werden,
- anschließend, wenn sich das Paar Schwenkarme (140) in der Betriebsstellung befindet, automatisch von der Rückstellfeder in die in dem Hauptkörper (110) ausgebildete Aufnahme zurückgeführt zu werden, um das Paar Schwenkarme (140) in der Betriebsstellung zu verriegeln.

4. Bodenmanövriervorrichtung (100) nach einem der Ansprüche 1 bis 3, die umfasst
- eine erste Drehachse (121), die sich in der Längsrichtung D des Hauptkörpers (110) erstreckt und die mit dem Befestigungselement (120) derart verbunden ist, dass sich das Befestigungselement um die erste Drehachse (121) in einem vorbestimmten Winkelbereich drehen kann, und
- mindestens ein Verriegelungselement (122), das dazu ausgelegt ist, das Befestigungselement (120) rotatorisch und lösbar derart zu verriegeln, dass sich das Befestigungselement (120) bewegen kann zwischen
• einer Einhakposition, in welcher
▪ das Befestigungselement (120) am Landegestell (10) eingehängt ist, und
▪ das Verriegelungselement (122) das Befestigungselement (120) rotatorisch verriegelt,
• einer Freigabeposition, in der das Verriegelungselement (122) das Befestigungselement (120) freigibt.

5. Bodenmanövriervorrichtung (100) nach Anspruch 4, wobei das Befestigungselement (120) die erste Drehachse (121) und das Verriegelungselement (122) umfasst.

6. Bodenmanövriervorrichtung (100) nach einem der Ansprüche 1 bis 5, die umfasst
- eine Drehachse einer Zugvorrichtung (190), die sich entlang einer Querrichtung des Hauptkörpers (110) erstreckt, und
- eine drehbare Zugvorrichtung (191) mit Handgriff, die mindestens einen ersten Zuggriff (1911) und mindestens einen Längsarm (1912) umfasst, wobei der Längsarm (1912) ein erstes Ende und ein zweites Ende aufweist, wobei der erste Zuggriff (1911) mit dem ersten Ende des Längsarms (1912) verbunden ist, wobei die Drehachse der Zugvorrichtung (190) mit dem zweiten Ende des Längsarms (1912) verbunden ist, wobei die drehbare Zugvorrichtung (191) mit Handgriff dazu ausgelegt ist, rotatorisch verschoben zu werden zwischen mindestens
• einer zusammengeklappten Position, in welcher die drehbare Zugvorrichtung (191) mit Handgriff an den Hauptkörper (110) geklappt ist, und
• einer ausgefahrenen Position, in welcher
▪ sich die drehbare Zugvorrichtung (191) mit Handgriff von dem Hauptkörper (110) entfernt, indem sie längs von dem Hauptkörper (110) vorsteht, und
▪ der Hauptkörper (110) relativ zu dem Boden geneigt sein kann und von der drehbaren Zugvorrichtung (191) mit Handgriff in eine geneigte Rollposition gezogen werden kann, so dass der Bediener die Bodenmanövriervorrichtung (100) an eine gewünschte Stelle rollen kann, indem er die drehbare Zugvorrichtung (191) mit Handgriff in eine gewünschte Richtung schiebt oder zieht.

7. Bodenmanövriervorrichtung (100) nach Anspruch 6, wobei die Winkeldifferenz der Position der drehbaren Zugvorrichtung (191) mit Handgriff zwischen der eingeklappten und der ausgefahrenen Position 180° oder weniger beträgt.

8. Bodenmanövriervorrichtung (100) nach einem der Ansprüche 6 bis 7, wobei die drehbare Zugvorrichtung (191) mit Handgriff ferner dazu ausgelegt ist, aus der ausgefahrenen Position oder aus der eingeklappten Position in eine Stabilisierungsposition bewegt zu werden, in welcher
- der Hauptkörper (110) relativ zu dem Boden geneigt werden kann, und
- die drehbare Zugvorrichtung (191) mit Handgriff im Bereich ihres distalen Endes mit dem Boden in Berührung kommt und den Hauptkörper (110) trägt.

9. Bodenmanövriervorrichtung (100) nach Anspruch 8, wobei die Winkeldifferenz der Position der drehbaren Zugvorrichtung (191) mit Handgriff zwischen der ausgefahrenen Position und der Stabilisierungsposition 90° oder weniger beträgt.

10. Bodenmanövriervorrichtung (100) nach einem der Ansprüche 6 bis 9, die ferner eine zweite Verriegelungsvorrichtung (195) umfasst, die die drehbare Zugvorrichtung (191) mit Handgriff in einer eingeklappten Position, einer ausgefahrenen Position oder einer Stabilisierungsposition hält, wobei die zweite Verriegelungsvorrichtung (195) dazu ausgelegt ist, um
- in Bohrungen einzugreifen, die den Positionen der drehbaren Zugvorrichtung (191) entsprechen und in dem Steuerhebel (170) ausgebildet sind,
- von einer Feder gedrückt zu werden, um automatisch in einer der Bohrungen einzurasten, wenn die drehbare Zugvorrichtung (191) eine der Positionen erreicht, und
- von einem Bediener gezogen zu werden, um sich aus der Bohrung zu lösen und die Rotation der drehbaren Zugvorrichtung (191) zu einer anderen der Bohrungen zu ermöglichen.

11. Bodenmanövriervorrichtung (100) nach einem der Ansprüche 6 bis 10, die ferner einen zweiten Zuggriff (193) umfasst, der am Hauptkörper (110) derart angeordnet und eingerichtet ist, dass der Bediener gleichzeitig das Pedal (180) und den zweiten Zuggriff (193) erreicht, um die Bodenmanövriervorrichtung (100) zu transportieren und/oder die Bodenmanövriervorrichtung (100) auf dem Landegestell (10) zu positionieren.

12. Bodenmanövriervorrichtung (100) nach einem der Ansprüche 1 bis 11, wobei die Vorrichtung zur selektiven Verschiebung (160) mindestens einen Hydraulikzylinder (161) umfasst, der umfasst
- mindestens einen ausfahrenden Kolben, der ein Ende aufweist, das dazu ausgelegt ist, derart auf das Paar Schwenkarme (140) einzuwirken, dass das Paar Schwenkarme (140) zwischen der Transportstellung und der Betriebsstellung verschoben wird,
- mindestens eine Zylinderstange, die mit dem ausfahrenden Kolben verbunden ist,
- mindestens einen Behälter (162) für Hydraulikfluid,
- eine Drehantriebswelle einer Hydraulikpumpe (163), die sich entlang einer Querrichtung des Hauptkörpers (110) erstreckt und die dazu ausgelegt ist, sich in der Querrichtung zu drehen, wobei die Drehantriebswelle der Hydraulikpumpe (163) drehfest mit dem Steuerhebel (170) verbunden ist,
- ein Bewegungsübertragungssystem (164), das mit der Drehantriebswelle der Hydraulikpumpe (163) verbunden ist und das dazu ausgelegt ist, die Rotation der Drehantriebswelle der Hydraulikpumpe (163) in eine lineare Bewegung umzuwandeln, und
- mindestens eine Hydraulikpumpe (165), die mit dem Bewegungsübertragungssystem (164) und dem Behälter (162) für Hydraulikfluid verbunden ist, wobei die Hydraulikpumpe (165) dazu ausgelegt ist, um
• die Vorrichtung zur selektiven Verschiebung (160) aus dem Behälter (162) für Hydraulikfluid mit Hydraulikfluid zu versorgen, und
• durch das Bewegungsübertragungssystem (164) betätigt zu werden,
wobei das Bewegungsübertragungssystem (164) umfasst:
- mindestens einen Übertragungshebel (1641), der drehfest mit der Drehantriebsdrehwelle der Hydraulikpumpe (163) verbunden ist, und
- eine Vielzahl von Verbindungsstangen (1642), von denen mindestens eine Verbindungsstange (1642) den Übertragungshebel (1641) mit der Hydraulikpumpe (165) verbindet.

13. Bodenmanövriervorrichtung (100) nach einem der Ansprüche 1 bis 12, wobei jeder Schwenkarm (140) in Form einer Platte vorliegt, die mindestens eine erste Entlastungsöffnung (143) umfasst.

14. Bodenmanövriervorrichtung (100) nach einem der Ansprüche 1 bis 13, wobei der Steuerhebel (170) in Form einer Platte vorliegt, die mindestens eine zweite Entlastungsöffnung (171) aufweist.

## Claims

1. A ground manoeuvring device (100) designed to lift a landing gear skid (10) of an apparatus with landing gear skid in order to manoeuvre it on the ground, the landing gear skid (10) being previously in contact with the ground and resistant to traction, the ground manoeuvring device (100) comprising,
- a main body (110) which extends in a longitudinal direction, D, between a rear part (200) and a front part (300), and which is designed to be disposed on the landing gear skid (10),
- at least one fastening element (120) which is connected to the main body (110) and designed to be releasably attached to the landing gear skid (10),
- a first rotary shaft (130) which extends in a transverse direction of the main body (110) and which is designed to rotate in the transverse direction,
- a pair of pivoting arms (140), each pivoting arm (140) having a proximal part (141) and a distal part (142), the pivoting arms (140) being connected to each other in parallel, in a rotationally fixed manner, by their proximal part (141), at the first rotary shaft (130),
- a pair of axles (150), each axle (150) having a proximal end (151) and a distal end (152),
• the proximal end (151) being integrally connected to the distal part (142) of a respective pivoting arm (140), and
• the distal end (152) being connected to a respective wheel (50) so that the wheel (50) can rotate freely about the axle (150),
- at least one device (160) for selective displacement of the pair of pivoting arms (140) relative to the main body (110), the selective displacement device (160) being disposed within the main body (110) and arranged to act on the pair of pivoting arms (140) in order to pivot it about the first rotary shaft (130) relative to the main body (110), so as to displace the pair of pivoting arms (140) between,
• a transport position in which the distal part (142) of the pair of pivoting arms (140) substantially faces in the longitudinal direction, D, and
• an operating position in which the distal part (142) of the pair of pivoting arms (140) substantially faces the ground, so that the wheels (50) come into contact with the ground and the landing gear skid (10) is lifted from the ground,
- at least one control lever (170) which extends in the longitudinal direction, D, of the main body (110) and which is designed to be displaced in a repeated up and down reciprocating movement, M, in a vertical direction with respect to the longitudinal direction, D, of the main body (110), each cycle of the repeated vertical reciprocating movement, M, comprising a successive up phase and down phase, to actuate the selective displacement device (160), the ground manoeuvring device (100) being **characterized in that** it comprises
- at least one return element coupled to the control lever (162) and designed to automatically return the control lever (162) either to a high point when the downward phase of the repeated vertical reciprocating movement, M, reaches a low point, or to the low point when the upward phase of the repeated vertical reciprocating movement, M, reaches the high point, so that the vertical reciprocating movement, M, of the control lever (170) is automatically repeated as long as an external force is applied to the control lever (170).

2. The ground manoeuvring device (100) according to claim 1 comprising at least one pedal (180), separate from the control lever (170), which is integrally connected to the control lever (170) and which is designed to be actuated by an operator so as to initiate and impart to the control lever (170) the repeated vertical reciprocating movement, M, which actuates the selective displacement device (160).

3. The ground manoeuvring device (100) according to any one of claims 1 to 2, further comprising a first locking device (194) which holds the pair of pivoting arms (140) in the operating position, the first locking device (194) being designed,
- when moving from the transport position to the operating position, to be pushed out of a housing formed in the main body (110) by all or part of the distal part (142) of the pair of pivoting arms (140) against the force of a return spring,
- then, when the pair of pivoting arms (140) is in the operating position, to be returned automatically by the return spring into the housing formed in the main body (110) in order to lock the pair of pivoting arms (140) in the operating position.

4. The ground manoeuvring device (100) according to any one of claims 1 to 3 comprising,
- a first rotation shaft (121) which extends in the longitudinal direction, D, of the main body (110) and which is connected to the fastening element (120) so that the fastening element can rotate about the first rotation shaft (121) within a predetermined angular range, and
- at least one locking element (122) which is designed to releasably rotationally lock the fastening element (120) so that the fastening element (120) can change between,
• an attachment position in which,
▪ the fastening element (120) is attached to the landing gear skid (10), and
▪ the locking element (122) locks the fastening element (120) against rotation,
• a free position in which the locking element (122) leaves the fastening element (120) free.

5. The ground manoeuvring device (100) according to claim 4, wherein the fastening element (120) comprises the first rotation shaft (121) and the locking element (122).

6. The ground manoeuvring device (100) according to any one of claims 1 to 5, comprising,
- a second rotation shaft (190) which extends in a transverse direction of the main body (110), and
- a manually-operated rotary traction device (191) comprising at least one first traction handle (1911) and at least one longitudinal arm (1912), the longitudinal arm (1912) having a first end and a second end, the first traction handle (1911) being connected to the first end of the longitudinal arm (1912), the second rotation shaft (190) being connected to the second end of the longitudinal arm (1912),
wherein, the manually-operated rotary traction device (191) is designed to be rotated between at least,
• a folded position in which the manually-operated rotary traction device (191) is folded onto the main body (110), and
• a deployed position in which,
▪ the manually-operated rotary traction device (191) moves away from the main body (110), projecting longitudinally from the main body (110), and
▪ the main body (110) can be inclined relative to the ground and can be pulled by the manually-operated rotary traction device (191) into an inclined rolling position, so as to enable the operator to roll the ground manoeuvring device (100) to a desired location by pushing or pulling the manually-operated rotary traction device (191) in a desired direction.

7. The ground manoeuvring device (100) according to claim 6, wherein the angular difference in position of the manually-operated rotary traction device (191) between the folded position and the extended position is 180° or less.

8. The ground manoeuvring device (100) according to any one of claims 6 to 7, wherein the manually-operated rotary traction device (191) is further designed to be displaced into a stabilisation position, from the extended position or from the folded position, in which,
- the main body (110) can be inclined relative to the ground, and
- the manually-operated rotary traction device (191) comes into contact with the ground at its distal end and supports the main body (110).

9. The ground manoeuvring device (100) according to claim 8, wherein the angular difference in position of the manually-operated rotary traction device (191) between the deployed position and the stabilisation position is 90° or less.

10. The ground manoeuvring device (100) according to any one of claims 6 to 9, further comprising a second locking device (195), which holds the manually-operated rotary traction device (191) in a folded position, a deployed position or a stabilisation position, the second locking device (195) being designed,
- to engage in holes corresponding to said positions of the rotary traction device (191) and formed in the control lever (170),
- to be pushed by a spring to be automatically inserted into one of said holes when the rotary traction device (191) reaches one of said positions, and
- to be pulled by an operator to disengage from the hole and allow the rotary traction device (191) to rotate to another of said holes.

11. The ground manoeuvring device (100) according to any one of claims 2 to 10, further comprising a second traction handle (193) which is disposed and arranged on the main body (110) so that the operator can grasp, at the same time, the pedal (180) and the second traction handle (193) to transport the ground manoeuvring device (100) and/or position the ground manoeuvring device (100) on the landing gear skid (10).

12. The ground manoeuvring device (100) according to any one of claims 1 to 11, wherein the selective displacement device (160) comprises at least one hydraulic cylinder (161) which comprises,
- at least one extendable piston which has an end which is designed to act on the pair of pivoting arms (140) so as to move the pair of pivoting arms (140) between the transport position and the operating position,
- at least one cylinder rod connected to the extendable piston,
- at least one hydraulic fluid reservoir (162),
- a second rotary shaft (163) which extends in a transverse direction of the main body (110) and which is designed to rotate in the transverse direction, the second rotary shaft (163) being connected to the control lever (170) in a rotationally fixed manner,
- a motion transmission system (164) which is connected to the second rotary shaft (163) and which is designed to transform the rotation of the second rotary shaft (163) into a linear motion, and
- at least one hydraulic pump (165) which is connected to the motion transmission system (164) and to the hydraulic fluid reservoir (162), the hydraulic pump (165) being designed,
• to supply the selective displacement device (160) with hydraulic fluid from the hydraulic fluid reservoir (162), and
• to be actuated by the motion transmission system (164),
wherein, the motion transmission system (164) comprises,
- at least one transmission lever (1641) which is connected to the second rotary shaft (163) in a rotationally fixed manner, and
- a plurality of links (1642), of which at least one link (1642) connects the transmission lever (1641) to the hydraulic pump (165).

13. The ground manoeuvring device (100) according to any one of claims 1 to 12, wherein each pivoting arm (140) is in the form of a plate which comprises at least one first weight-lightening aperture (143).

14. The ground manoeuvring device (100) according to any one of claims 1 to 13, wherein the control lever (170) is in the form of a plate which comprises at least one second weight-lightening aperture (171).
